# FASCICULE DE BREVET EUROPEEN

(11) **EP 4 476 131 B1**
(45) Date de publication et mention de la délivrance du brevet: **11.03.2026**
(21) Numéro de dépôt: 23706664.2
(22) Date de dépôt: 31.01.2023
(51) Int. Cl.: B63B 21/50, G01M 5/00, B63B 21/00, B63B 35/44

(54) **DISPOSITIF DE SURVEILLANCE D'AU MOINS UNE LIGNE D'ANCRAGE POUR SUPPORT FLOTTANT**
VORRICHTUNG ZUR ÜBERWACHUNG MINDESTENS EINER VERANKERUNGSLEITUNG FÜR EINEN SCHWIMMENDEN TRÄGER
DEVICE FOR MONITORING AT LEAST ONE ANCHORING LINE FOR A FLOATING SUPPORT

(30) Priorité: 10.02.2022 FR 2201175
(43) Date de publication de la demande: 18.12.2024
(73) Titulaire: Nantes Université, 44000 Nantes (FR); Keops Performance, 44470 Carquefou (FR)
(72) Inventeur: SCHOEFS, Franck, 44240 Sucé sur Erdre (FR); CHEVALIER, Jean Michel, 44240 Sucé sur Erdre (FR); FOLLUT, Dominique, 44700 Orvault (FR)
(74) Mandataire: Novagraaf Technologies
(86) Numéro de dépôt international: PCT/FR2023/050120
(87) Numéro de publication internationale: WO 2023/152435

(56) Documents cités:
- WO-A1-2007/079556
- CN-A- 102 385 051
- DE-A1- 102019 103 313
- FR-A1- 3 080 831
- US-A1- 2017 057 603
- US-A1- 2018 163 532

## Description

La présente invention a pour objet un dispositif de surveillance d'au moins une ligne d'ancrage pour support flottant. Le support flottant peut être par exemple une plate-forme flottante, notamment une plate-forme « offshore » en langue anglaise, en particulier une plate-forme pétrolière ou une plate-forme pour éoliennes. Le dispositif permet notamment de détecter une rupture, une usure ou une détérioration de la ligne d'ancrage.

Le système d'ancrage d'un support flottant a pour fonction principale de maintenir le support en position lorsque ce dernier est soumis aux efforts du vent, du courant et de la houle.

L'ancrage d'objets en mer reste un sujet sensible et délicat. Ceci est d'autant plus vrai que les objets en mer sont volumineux et par conséquent lourds et/ou sensibles aux conditions de leur environnement. Ainsi, une part non négligeable des incidents ou accidents dans le domaine des plates-formes est liée à des ruptures d'ancrage. En ce qui concerne les éoliennes flottantes, les difficultés sont amplifiées par l'utilisation de nouveaux matériaux tels que des polyester/polyamides pour réduire les coûts et par le fait de devoir gérer un parc d'une centaine de structures avec pour certaines des points d'ancrage communs, et des structures non habitées, ce qui diminue la réactivité en cas de rupture.

Dans tous les cas, les trois possibilités de rupture de la ligne d'ancrage sont : un accident (par exemple par collision), la fatigue amplifiée par la biocolonisation, et une situation extrême liée à une tempête.

La question de l'ancrage est un sujet important et stratégique pour les exploitants de systèmes amarrés en mer. Afin de mieux évaluer la qualité de ces amarres et surtout de vérifier qu'elles ne soient pas rompues, des systèmes dédiés de surveillance sont nécessaires. Et ce d'autant plus que la majorité des incidents se révèle par mauvais temps, rendant encore plus difficile une inspection humaine. Les ruptures peuvent être causées par l'usure, l'impact de conditions sévères, ou encore des contraintes trop importantes engendrées par un choc accidentel. Elles peuvent se produire lors de conditions difficiles mais aussi se révéler à un instant tardif alors qu'elles sont latentes depuis une longue période. Un système de surveillance avec des alarmes semble donc particulièrement opportun.

Il est connu un système de surveillance mettant en œuvre des mesures de tension au niveau des accroches des amarres sur la plate-forme, ce qui présente un avantage pour la mise en œuvre et la maintenance du fait d'une exposition limitée aux différentes agressions. Ce système, onéreux et souvent délicat à mettre en œuvre, ne présente toutefois pas une grande sensibilité et le poids propre de l'amarre crée une tension qui peut grandement parasiter la détection d'une rupture. Cette qualité de détection est également entamée par la bio-colonisation (organismes marins végétaux ou animaux colonisant l'ancrage) qui peut générer des masses ajoutées importantes à certaines périodes puis des changements brusques de masse lors de dégrappages en cas de tempête.

Il existe également des systèmes de surveillance mettant en œuvre des mesures le long de la ligne d'ancrage avec des capteurs de tension. Cette solution est fiable mais nécessite toutefois une mise en œuvre plus complexe car il faut installer un capteur alimenté avec un câble pour transmettre les données le long de la ligne d'ancrage ou une batterie avec un système de transmission actif. Ceci ajoute des composants sensibles, à surveiller, et, plus généralement, diminue la fiabilité. Les risques d'altération ou de coupure de câble sont importants, notamment dans les environnements sévères mentionnés ci-dessus. Le document DE102019103313 donne un exemple de dispositif de surveillance d'une ligne d'ancrage.

La présente invention vise à remédier à ces inconvénients.

Elle propose en particulier un dispositif de surveillance d'au moins une ligne d'ancrage pour support flottant.

Le dispositif selon l'invention comprend :
- au moins une ligne d'ancrage, reliée à un support flottant,
- au moins un système acoustique, solidaire de ladite au moins une ligne d'ancrage, et comprenant un élément, appelé élément oscillant, (et notamment un élément oscillant sans apport externe d'énergie) apte à se déplacer entre deux positions d'extrémité et apte à venir en contact avec un élément résonant dans l'une au moins des deux positions d'extrémité, de manière à produire une onde acoustique lors du contact de l'élément oscillant avec l'élément résonant, et
- un système de traitement des ondes acoustiques produites, apte à caractériser, en fonction des ondes acoustiques produites, un fonctionnement normal de ladite au moins une ligne d'ancrage ou un fonctionnement défaillant de ladite au moins une ligne d'ancrage.

Le système de traitement des ondes acoustiques peut être apte à analyser les ondes acoustiques produites, et peut être notamment apte à les comparer à des ondes de référence caractérisant un fonctionnement normal de ladite au moins une ligne d'ancrage. Le système de traitement des ondes acoustiques peut ainsi être apte à caractériser un fonctionnement défaillant de ladite au moins une ligne d'ancrage en cas de différence entre les ondes acoustiques produites et les ondes de référence.

Le système de traitement des ondes acoustiques peut être apte à émettre un signal d'alarme en cas d'une caractérisation d'un fonctionnement défaillant de ladite au moins une ligne d'ancrage.

Le système de traitement des ondes acoustiques peut comprendre au moins un hydrophone apte à transformer les ondes acoustiques produites en des signaux électriques.

Ledit au moins un hydrophone peut être disposé sous un support flottant.

Le système de traitement des ondes acoustiques peut être apte à caractériser un fonctionnement normal de ladite au moins une ligne d'ancrage ou un fonctionnement défaillant (rupture ou endommagement) de ladite au moins une ligne d'ancrage en fonction de la fréquence et/ou de la hauteur des signaux électriques.

Ledit au moins un système acoustique peut être une cloche comprenant en tant qu'élément oscillant un battant oscillant en rotation à l'intérieur d'un corps de cloche.

Ledit au moins un système acoustique peut comprendre un élément oscillant apte à se déplacer, par exemple en translation, entre deux butées faisant office d'élément résonant.

Le fonctionnement défaillant de la ligne d'ancrage peut être une rupture, par exemple totale ou partielle, ou une dégradation (par exemple perte de matière (usure, corrosion, ruptures de fibres) ou dégradation des propriétés de la matière (par exemple perte d'élasticité, élongation)) de ladite au moins une ligne d'ancrage.

Le fonctionnement défaillant de la ligne d'ancrage peut également être une bio-colonisation de ladite au moins une ligne d'ancrage.

En cas de fonctionnement défaillant de ladite au moins une ligne d'ancrage, on peut envoyer un plongeur ou un robot sous-marin pour intervenir sur ladite au moins une ligne d'ancrage. Plus généralement on peut déclencher une inspection et une réparation de ladite au moins une ligne d'ancrage.

D'autres avantages et particularités de la présente invention résulteront de la description qui va suivre, donnée à titre d'exemple non limitatif et faite en référence aux figures annexées :
[Fig. 1] est une vue générale schématique de supports flottants munis d'un dispositif de surveillance d'au moins une ligne d'ancrage pour support flottant selon l'invention,
[Fig. 2] est une vue schématique d'un système acoustique mis en œuvre dans le dispositif de surveillance selon l'invention, conformément à un premier mode de réalisation, et
[Fig. 3] est une vue schématique d'un système acoustique mis en œuvre dans le dispositif de surveillance selon l'invention, conformément à un deuxième mode de réalisation.

### DESCRIPTION DETAILLEE

L'invention concerne le domaine de l'ancrage des supports flottants, notamment pour les applications pétrolières offshore et/ou des applications du domaine des énergies marines renouvelables, en particulier pour les supports flottants destinés aux éoliennes.

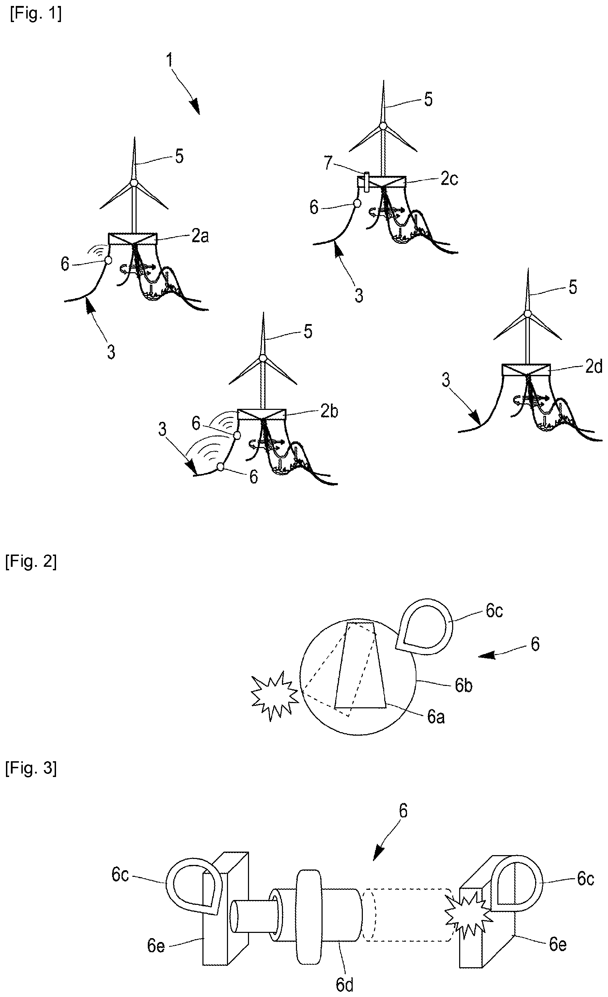

Tel qu'illustré à la figure 1, des supports flottants 2a, 2b, 2c, 2d destinés à des éoliennes 5 sont reliés chacun à une ancre via une ligne d'ancrage 3.

Conformément à l'invention, au moins un système acoustique 6 est disposé sur les lignes d'ancrage 3 que l'on souhaite surveiller.

Pour le support flottant 2a, un unique système acoustique 6 est solidaire de la ligne d'ancrage 3. Une telle configuration permet de détecter un fonctionnement défaillant de la ligne d'ancrage, telle qu'une rupture de la ligne d'ancrage, au-dessus ou en dessous du système acoustique 6.

Pour le support flottant 2b, deux système acoustiques 6 sont solidaires de la ligne d'ancrage 3. Une telle configuration permet de détecter un fonctionnement défaillant de la ligne d'ancrage au-dessus du système acoustique supérieur, entre le système acoustique supérieur et le système acoustique inférieur, et en dessous du système acoustique inférieur.

Le support flottant 2c est quant à lui muni d'un système immergé 7 de traitement des ondes acoustiques produites par les systèmes acoustiques 6. Le système 7 de traitement des ondes acoustiques peut comprendre un ou plusieurs hydrophones. Le système 7 de traitement des ondes acoustiques est de préférence immergé et fixé solidairement au flotteur ce qui permet d'assurer sa maintenance. Chaque support flottant ou certains supports flottants peuvent être munis d'au moins un hydrophone. Les systèmes acoustiques sont de préférence disposés sur les points de connexion.

Une ligne d'ancrage 3 est généralement composée de quatre composants : un composant de surface, un premier connecteur, un composant de la tranche d'eau, un deuxième connecteur, et un composant du fond connecté à un quatrième connecteur solidaire de l'ancre.

Le dispositif 1 de surveillance d'une ligne d'ancrage pour support flottant selon l'invention met en œuvre un système oscillant venant au contact d'un élément résonant, transformant ce déplacement en un bruit comme le ferait une cloche attachée aux amarres. Le tintement est surveillé via les systèmes 7 de traitement des ondes acoustiques.

Dans un premier mode de réalisation, tel qu'illustré à la figure 2, le système acoustique 6 est une cloche. La cloche comprend un marteau ou battant 6a qui vient frapper la surface extérieure 6b de la cloche formant un élément résonant. Un élément d'accroche 6c permet de solidariser la cloche à la ligne d'ancrage.

Dans un deuxième mode de réalisation, le système acoustique 6 est un oscillateur linéaire de type barreau. Un tube coulissant 6d vient frapper sur des plaques 6e. En position verticale, il suffit de disposer d'un matériau plus dense que l'eau.

Le postulat sur lequel est basé ce principe réside dans le fait qu'un système acoustique suspendu à une amarre tendue oscille et sonne ce qui n'est plus le cas lors de la rupture ou alors ce carillon est altéré par la différence induite par la perte de tension. Il s'agit alors de disposer ces systèmes acoustiques sur la ligne d'ancrage et d'identifier leurs sons pour caractériser une ligne d'ancrage tendue. L'absence ou l'altération des sons est un signe probable de rupture permettant un déclenchement d'alarme.

Ces systèmes acoustiques sont originaux dans leur forme mais aussi dans la manière de réalisation permettant de générer un tintement dans une gamme de fréquences qui sera spécifique et qui pourra donc être isolée du bruit de fond ambiant. De la même manière, des séries de systèmes acoustiques pourront être produites avec chacune leur signature propre (provenant du matériau impactant et/ou de la géométrie) afin de les identifier isolément, permettant de suivre plusieurs lignes simultanément mais aussi d'étager des points de mesure le long d'une même ligne afin d'opérer une détection plus fine.

En variante, au lieu de détecter une rupture de la ligne d'ancrage, le dispositif selon l'invention peut permettre de détecter une bio-colonisation de la ligne d'ancrage ou une dégradation. On peut ainsi utiliser la variation de battement (récurrence du son) de l'onde acoustique due à la colonisation afin de quantifier indirectement la présence puis l'intensité (épaisseur-masse) de la bio-colonisation.

La bio-colonisation est en effet la cause du changement d'épaisseur et de masse des câbles, ce qui modifie leur chargement extrême et leur tenue à la fatigue. Elle est connue pour être le phénomène majeur influant sur la fatigue des câbles.

Grâce au dispositif selon l'invention, on dispose d'une évaluation non destructive de ce phénomène et ne nécessitant pas de plongée, permettant d'optimiser les plans d'inspection, de nettoyage et de maintenance. A cet effet, une base de données de bruits de fréquence en fonction de la densité et de l'épaisseur de la ligne d'ancrage sera réalisée et protégée. On pourra alors relier, à une espèce donnée, puisque les sites ont une espèce dominante, la fréquence et l'épaisseur, même incertaine, qui permettra de mettre à jour les modèles. La conception du système acoustique favorisera (par sa géométrie et son matériau) une colonisation similaire à celle d'un câble.

Dans cette variante, on pourra utiliser un système acoustique tubulaire de diamètre voisin de celui du câble (typiquement 30 cm) et revêtu de la couche externe du câble (un film protecteur ou des fils tressés).

Le dispositif de surveillance présente de manière générale plusieurs avantages:
- il limite le nombre de capteurs, les capteurs étant des hydrophones disposés à proximité de la surface de la mer et offrant une mise en œuvre ainsi qu'une maintenance simplifiées,
- il présente une grande robustesse du fait de sa simplicité et des matériaux utilisés,
- il est très peu impactant sur la ligne d'ancrage, car il ne nécessite qu'un maillon pour l'accroche et il peut notamment être fixé aux connecteurs sans problème de certification,
- son coût reste compétitif au regard des avantages procurés et des enjeux considérés,
- il s'adapte aisément sur tous les systèmes d'ancrage, y compris ceux déjà installés,
- il ne nécessite pas de maintenance si la bio-colonisation de surface est stoppée ou traitée par ailleurs, le mouvement de l'élément oscillant n'est pas impacté par la bio-colonisation, soit parce que le système acoustique est fermé, soit parce que le système acoustique a une fréquence élevée,
- il ne nécessite pas d'apport d'électricité le long de la ligne d'ancrage et donc aussi pas de maintenance liée à ces composants électriques.

## Revendications

1. Dispositif (1) de surveillance d'au moins une ligne d'ancrage (3) pour support flottant, **caractérisé en ce qu'**il comprend :
- au moins une ligne d'ancrage (3), reliée à un support flottant (2a, 2b, 2c, 2d),
- au moins un système acoustique (6), solidaire de ladite au moins une ligne d'ancrage (3), et comprenant un élément, appelé élément oscillant (6a, 6d), sans apport externe d'énergie, apte à se déplacer entre deux positions d'extrémité et apte à venir en contact avec un élément résonant (6b, 6e) dans l'une au moins des deux positions d'extrémité, de manière à produire une onde acoustique lors du contact de l'élément oscillant (6a, 6d) avec l'élément résonant (6b, 6e), et
- un système de traitement des ondes acoustiques (7) produites, apte à caractériser, en fonction des ondes acoustiques produites, un fonctionnement normal de ladite au moins une ligne d'ancrage (3) ou un fonctionnement défaillant de ladite au moins une ligne d'ancrage (3).

2. Dispositif (1) selon la revendication 1, **caractérisé en ce que** le système de traitement des ondes acoustiques (7) est apte à comparer les ondes acoustiques produites à des ondes de références caractérisant un fonctionnement normal de ladite au moins une ligne d'ancrage (3).

3. Dispositif (1) selon la revendication 1 ou 2, **caractérisé en ce que** le système de traitement des ondes acoustiques (7) est apte à émettre un signal d'alarme en cas d'une caractérisation d'un fonctionnement défaillant de ladite au moins une ligne d'ancrage (3).

4. Dispositif (1) selon l'une des revendications 1 à 3, **caractérisé en ce que** le système de traitement des ondes acoustiques (7) comprend au moins un hydrophone apte à transformer les ondes acoustiques produites en des signaux électriques.

5. Dispositif (1) selon la revendication 4, **caractérisé en ce que** ledit au moins un hydrophone est disposé sous un support flottant (2a, 2b, 2c, 2d).

6. Dispositif selon la revendication 4 ou 5, **caractérisé en ce que** le système de traitement des ondes acoustiques (7) est apte à caractériser un fonctionnement normal de ladite au moins une ligne d'ancrage (3) ou un fonctionnement défaillant de ladite au moins une ligne d'ancrage (3) en fonction de la fréquence et/ou de la hauteur des signaux électriques.

7. Dispositif (1) selon l'une des revendications 1 à 6, **caractérisé en ce que** ledit au moins un système acoustique (6) est une cloche comprenant en tant qu'élément oscillant un battant (6a) oscillant en rotation à l'intérieur d'un corps de cloche (6b).

8. Dispositif selon l'une (1) des revendications 1 à 6, **caractérisé en ce que** ledit au moins un système acoustique (6) comprend un élément oscillant (6d) apte à se déplacer en translation entre deux butées (6e) faisant office d'élément résonant.

9. Dispositif (1) selon l'une des revendications 1 à 8, **caractérisé en ce que** le fonctionnement défaillant de la ligne d'ancrage (3) est une rupture de ladite au moins une ligne d'ancrage (3).

10. Dispositif (1) selon l'une des revendications 1 à 8, **caractérisé en ce que** le fonctionnement défaillant de ladite au moins une ligne d'ancrage (3) est une bio-colonisation ou une dégradation de ladite au moins une ligne d'ancrage (3)

## Patentansprüche

1. Vorrichtung (1) für eine Überwachung von mindestens einer Verankerungsleine (3) für einen schwimmenden Träger,
**dadurch gekennzeichnet, dass** sie umfasst:
- mindestens eine Verankerungsleine (3), die mit einem schwimmenden Träger (2a, 2b, 2c, 2d) verbunden ist,
- mindestens ein Schallsystem (6), das mit der mindestens einen Verankerungsleine (3) fest verbunden ist und umfassend ein Element, das als oszillierendes Element (6a, 6d) bezeichnet wird, ohne externe Energiezufuhr, das geeignet ist, um sich zwischen zwei Endpositionen zu bewegen und geeignet ist, um mit einem schwingenden Element (6b, 6e) in mindestens einer der zwei Endpositionen in Kontakt zu kommen, um eine Schallwelle während des Kontakts des oszillierenden Elements (6a, 6d) mit dem schwingenden Element (6b, 6e) zu erzeugen, und
- ein System für die Verarbeitung der erzeugten Schallwellen (7), das geeignet ist, um in Abhängigkeit von den erzeugten Schallwellen einen normalen Betrieb der mindestens einen Verankerungsleine (3) oder einen fehlerhaften Betrieb der mindestens einen Verankerungsleine (3) zu charakterisieren.

2. Vorrichtung (1) nach Anspruch 1, **dadurch gekennzeichnet, dass** das Schallwellenverarbeitungssystem (7) geeignet ist, um die erzeugten Schallwellen mit Referenzwellen zu vergleichen, die einen normalen Betrieb der mindestens einen Verankerungsleine (3) charakterisieren.

3. Vorrichtung (1) nach Anspruch 1 oder 2,
**dadurch gekennzeichnet, dass** das Schallwellenverarbeitungssystem (7) geeignet ist, um ein Alarmsignal im Falle einer Charakterisierung eines fehlerhaften Betriebs der mindestens einen Verankerungsleine (3) zu emittieren.

4. Vorrichtung (1) nach einem der Ansprüche 1 bis 3,
**dadurch gekennzeichnet, dass** das Schallwellenverarbeitungssystem (7) mindestens ein Hydrophon umfasst, das geeignet ist, um die erzeugten Schallwellen in elektrische Signale umzuwandeln.

5. Vorrichtung (1) nach Anspruch 4, **dadurch gekennzeichnet, dass** das mindestens eine Hydrophon unter einem schwimmenden Träger (2a, 2b, 2c, 2d) angeordnet ist.

6. Vorrichtung nach Anspruch 4 oder 5, **dadurch gekennzeichnet, dass** das Schallwellenverarbeitungssystem (7) geeignet ist, um einen normalen Betrieb der mindestens einen Verankerungsleine (3) oder einen fehlerhaften Betrieb der mindestens einen Verankerungsleine (3) in Abhängigkeit von der Frequenz und/oder der Höhe der elektrischen Signale zu charakterisieren.

7. Vorrichtung (1) nach einem der Ansprüche 1 bis 6,
**dadurch gekennzeichnet, dass** das mindestens eine Schallsystem (6) eine Glocke ist, umfassend, als oszillierendes Element, einen Klöppel (6a), der im Inneren eines Glockenkörpers (6b) rotierend schwingt.

8. Vorrichtung nach einem (1) der Ansprüche 1 bis 6,
**dadurch gekennzeichnet, dass** das mindestens eine Schallsystem (6) ein oszillierendes Element (6d) umfasst, das geeignet ist, um sich translatorisch zwischen zwei Anschlägen (6e) zu bewegen, die als schwingendes Element fungieren.

9. Vorrichtung (1) nach einem der Ansprüche 1 bis 8,
**dadurch gekennzeichnet, dass** der fehlerhafte Betrieb der Verankerungsleine (3) ein Bruch der mindestens einen Verankerungsleine (3) ist.

10. Vorrichtung (1) nach einem der Ansprüche 1 bis 8,
**dadurch gekennzeichnet, dass** der fehlerhafte Betrieb der mindestens einen Verankerungsleine (3) eine Bio-Kolonisation oder eine Schädigung der mindestens einen Verankerungsleine (3) ist.

## Claims

1. A device (1) for monitoring at least one anchoring line (3) for a floating support, **characterized in that** it comprises:
- at least one anchoring line (3), connected to a floating support (2a, 2b, 2c, 2d),
- at least one acoustic system (6), rigidly connected to said at least one anchoring line (3) and comprising an element, called an oscillating element (6a, 6d), without external energy input, able to move between two end positions and able to come into contact with a resonant element (6b, 6e) in at least one of the two end positions, in such a way as to produce an acoustic wave upon contact of the oscillating element (6a, 6d) with the resonant element (6b, 6e), and
- a system for processing the acoustic waves (7) produced, able to characterize, depending on the acoustic waves produced, normal functioning of said at least one anchoring line (3) or defective functioning of said at least one anchoring line (3).

2. The device (1) according to claim 1, **characterized in that** the system for processing the acoustic waves (7) is able to compare the acoustic waves produced with reference waves characterizing normal functioning of said at least one anchoring line (3).

3. The device (1) according to claim 1 or 2, **characterized in that** the system for processing the acoustic waves (7) is able to emit an alarm signal in the event of a characterization of defective functioning of said at least one anchoring line (3).

4. The device (1) according to one of claims 1 to 3, **characterized in that** the system for processing the acoustic waves (7) comprises at least one hydrophone able to transform the acoustic waves produced into electrical signals.

5. The device (1) according to claim 4, **characterized in that** said at least one hydrophone is arranged under a floating support (2a, 2b, 2c, 2d).

6. The device according to claim 4 or 5, **characterized in that** the system for processing the acoustic waves (7) is able to characterize normal functioning of said at least one anchoring line (3) or defective functioning of said at least one anchoring line (3) depending on the frequency and/or intensity of the electrical signals.

7. The device (1) according to one of claims 1 to 6, **characterized in that** said at least one acoustic system (6) is a bell comprising as oscillating element a clapper (6a) oscillating in rotation inside a bell body (6b).

8. The device (1) according to one of claims 1 to 6, **characterized in that** said at least one acoustic system (6) comprises an oscillating element (6d) able to move in translation between two stops (6e) acting as a resonant element.

9. The device (1) according to one of claims 1 to 8, **characterized in that** the defective functioning of the anchoring line (3) is a breakage of said at least one anchoring line (3).

10. The device (1) according to one of claims 1 to 8, **characterized in that** the defective functioning of said at least one anchoring line (3) is biocolonization or deterioration of said at least one anchoring line (3).
